# EUROPÄISCHE PATENTANMELDUNG

(11) **EP 4 741 097 A1**
(43) Veröffentlichungstag der Anmeldung: **13.05.2026**
(21) Anmeldenummer: 24211688.7
(22) Anmeldetag: 08.11.2024
(51) Int. Cl.: B23Q 1/54, B23Q 39/02

(54) **WERKZEUGMASCHINE FÜR DIE HERSTELLUNG FLACHER INSTRUMENTE UND/ODER WERKZEUGE FÜR DIE MEDIZINTECHNIK UND VERFAHREN ZUM HERSTELLEN FLACHER INSTRUMENTE UND/ODER WERKZEUGE FÜR DIE MEDIZINTECHNIK MIT EINER DERARTIGEN WERKZEUGMASCHINE**

(71) Anmelder: Schwäbische Werkzeugmaschinen GmbH, 78713 Schramberg-Waldmössingen (DE)
(72) Erfinder: Vidovic, Damir, 78112 St. Georgen (DE); Dreher, Matthias, 78573 Wurmlingen (DE)
(74) Vertreter: Schorr, Peter Karl

(57) **Zusammenfassung**

Die Erfindung betrifft eine Werkzeugmaschine (2) für die Herstellung flacher Instrumente und/oder Werkzeuge für die Medizintechnik mit einem Maschinengestell (4), mit mindestens einer Arbeitsspindel (6), die um eine Spindelachse (8) drehbar gelagert ist, mit mindestens einem der mindestens einen Arbeitsspindel (6) zuordenbaren oder zugeordneten Werkstücktisch (10), der mittelbar oder unmittelbar am Maschinengestell (4) um eine Tisch-Achse (12) dreh- oder schwenkbar gelagert ist, und mit mindestens einem Werkstückhalter (14), der am Werkstücktisch (10) festgelegt ist, der mindestens eine erste Werkstückaufnahme (16), an der ein flaches Werkstück (17) zum Bearbeiten einer Flachseite festlegbar ist, und der mindestens eine zweite Werkstückaufnahme (18) aufweist, die quer oder schräg zur ersten Werkstückaufnahme (16) verläuft und an der ein flaches Werkstück (17) zum Bearbeiten einer Stirnseite festlegbar ist, wobei mindestens einer des mindestens einen Werkstücktischs (10) von einer ersten Arbeitsstellung, in der die erste Werkstückaufnahme (16) mindestens einer der mindestens einen Arbeitsspindel (6) zum Bearbeiten zugänglich ist, durch Drehen oder Schwenken um die ihm zugeordnete Tisch-Achse (12) in eine zweite Arbeitsstellung überführbar ist, in der die zweite Werkstückaufnahme (18) mindestens einer der mindestens einen Arbeitsspindel (6) zum Bearbeiten zugänglich ist.

## Beschreibung

Die Erfindung betrifft eine Werkzeugmaschine für die Herstellung flacher Instrumente und/oder Werkzeuge für die Medizintechnik und Verfahren zum Herstellen flacher Instrumente und/oder Werkzeuge für die Medizintechnik mit einer derartigen Werkzeugmaschine.

Aus dem Stand der Technik ist es bekannt, flache Instrumente und/oder Werkzeuge aus Schmiedeteilen, so genannter Schlagware, "fliegend" bzw. "stehend" zu bearbeiten. Bei der Schlagware umfasst der Fertigungsprozess viele einzelne und auch manuelle Bearbeitungsschritte, die nachfolgend der maschinellen Bearbeitung beispielsweise ein manuelles Bandschleifen beinhalten können. Bei der "stehenden" oder "fliegenden" Bearbeitung unterliegt dieser oft sehr hohen Vibrationen. Durch die fertigungsbedingten Vibrationen kann die Qualität der fertigen Instrumente und/oder Werkzeuge reduziert sein, oder eine zeit- und kostenintensive Nachbearbeitung der einzelnen Instrumente und/oder Werkzeuge notwendig ist.

Darüber hinaus erweist sich das stetige Umspannen der einzelnen Werkstücke zur Herstellung der flachen Instrumente und/oder Werkzeuge als sehr zeitaufwändig und ebenfalls qualitätssenkend.

Eine Aufgabe eines Ausführungsbeispiels der Erfindung ist, eine Werkzeugmaschine für die Herstellung flacher Instrumente und/oder Werkzeuge vorzuschlagen, bei der eine Herstellungsdauer und eine Produktqualität der flachen Instrumente und/oder Werkzeuge, reduziert bzw. verbessert ist.

Diese Aufgabe wird gelöst durch eine Werkzeugmaschine für die Herstellung flacher Instrumente und/oder Werkzeuge mit einem Maschinengestell, mit mindestens einer Arbeitsspindel, die um eine Spindelachse drehbar gelagert ist, mit mindestens einem der mindestens einen Arbeitsspindel zuordenbaren oder zugeordneten Werkstücktisch, der mittelbar oder unmittelbar am Maschinengestell um eine Tisch-Achse dreh- oder schwenkbar gelagert ist, und mit mindestens einem Werkstückhalter, der am Werkstücktisch festgelegt ist, der mindestens eine erste Werkstückaufnahme, an der ein flaches Werkstück zum Bearbeiten einer Flachseite festlegbar ist, und der mindestens eine zweite Werkstückaufnahme aufweist, die quer oder schräg zur ersten Werkstückaufnahme verläuft und an der ein flaches Werkstück zum Bearbeiten einer Stirnseite festlegbar ist, wobei mindestens einer des mindestens einen Werkstücktischs von einer ersten Arbeitsstellung, in der die erste Werkstückaufnahme mindestens einer der mindestens einen Arbeitsspindel zum Bearbeiten zugänglich ist, durch Drehen oder Schwenken um die ihm zugeordnete Tisch-Achse in eine zweite Arbeitsstellung überführbar ist, in der die zweite Werkstückaufnahme mindestens einer der mindestens einen Arbeitsspindel zum Bearbeiten zugänglich ist.

Dadurch, dass die Werkzeugmaschine einen Werkstückhalter mit einer ersten Werkstückaufnahme und einer zweiten Werkstückaufnahme umfasst, kann ein flaches Instrument und/oder Werkzeug aus einem flachen Werkstück gefertigt werden, wobei maximal zwei Einspannungen notwendig sind.

Dadurch, dass ein flaches Werkstück an der ersten Werkstückaufnahme zum Bearbeiten einer Flachseite festlegbar ist, kann auf das Verwenden von Schlagware verzichtet werden und das herzustellende flache Instrument und/oder Werkzeug aus einem Vollmaterial gefräst werden. Durch das flächenhafte Festlegen des Werkstücks in der ersten Werkstückaufnahme ist die Gefahr eines Entstehens von Vibrationen beim Bearbeiten durch die Arbeitsspindel deutlich reduziert.

Dadurch, dass das flache Werkstück in der zweiten Werkstückaufnahme zum Bearbeiten einer Stirnseite festlegbar ist bzw. in Spannformbacken aufgenommen werden kann, können Arbeitsbereiche der flachen Instrumente und/oder Werkzeuge aus dem flachen Werkstück herausgearbeitet werden.

Die an der zweiten Werkstückaufnahme festlegbaren flachen Werkstücke können Werkstücke umfassen, die zuvor an der ersten Werkstückaufnahme festgelegt waren und durch die mindestens eine Antriebsspindel bearbeitet wurden.

Dadurch, dass der Werkstücktisch von einer ersten Arbeitsstellung in die zweite Arbeitsstellung und zurück überführbar ist, können die erste Werkstückaufnahme und die zweite Werkstückaufnahme des Werkstückhalters durch ein und dieselbe Arbeitsspindel bearbeitet werden.

Der mindestens eine Werkstücktisch kann grundsätzlich beliebig ausgebildet sein, sofern er der technischen Funktion nachkommt, den Werkstückhalter festzulegen. Es erweist sich als vorteilhaft, wenn mindestens einer des mindestens einen Werkstücktischs eine Haltefläche umfasst, an der mindestens einer des mindestens einen Werkstückhalters angeordnet ist, und die in der ersten Arbeitsstellung quer oder schräg zur Spindelachse der dem Werkstücktisch zugeordneten Arbeitsspindel und die in der zweiten Arbeitsstellung quer oder schräg zur Spindelachse der dem Werkstücktisch zugeordneten Arbeitsspindel angeordnet ist.

Bei einer Weiterbildung letztgenannter Ausführungsform ist vorgesehen, dass die erste Werkstückaufnahme des Werkstückhalters parallel oder schräg zur Haltefläche des Werkstücktischs verläuft und dass das an der ersten Werkstückaufnahme festgelegte flache Werkstück an seiner parallel oder schräg zur Haltefläche verlaufenden Flachseite durch die Arbeitsspindel bearbeitbar ist und/oder dass die zweite Werkstückaufnahme des Werkstückhalters quer oder schräg zur Haltefläche des Werkstücktischs verläuft und dass das an der zweiten Werkstückaufnahme festgelegte flache Werkstück an seiner quer oder schräg zur Haltefläche verlaufenden Stirnseite des Werkstücks durch die Arbeitsspindel bearbeitbar ist.

Dadurch, dass die erste Werkstückaufnahme des Werkstückhalters parallel oder schräg zur Haltefläche des Werkstücktischs verläuft, steht die erste Werkstückaufnahme quer oder schräg zur Spindelachse der Antriebsspindel, wenn sich der Werkstücktisch in der ersten Arbeitsstellung befindet. Das an der ersten Werkstückaufnahme festgelegte flache Werkstück kann solchenfalls flächenhaft mit einer parallel zur durch die Arbeitsspindel bearbeitbaren Flachseite an der Werkstückaufnahme anliegenden Anliegeseite, am Werkstückhalter anliegen. Hierdurch ist die Gefahr eines Entstehens von Vibrationen beim Bearbeiten des an der ersten Werkstückaufnahme festgelegten flachen Werkstücks durch die Arbeitsspindel reduziert. Hierdurch lässt sich die Bearbeitungsqualität verbessern.

Dadurch, dass die zweite Werkstückaufnahme des Werkstücks quer oder schräg zur Haltefläche des Werkstücktischs verläuft, ist das an der zweiten Werkstückaufnahme festgelegte flache Werkzeug in der zweiten Arbeitsstellung des Werkstücktischs durch die Arbeitsspindel bearbeitbar. Hierbei kann die Stirnseite des Werkstücks durch die Arbeitsspindel bearbeitet werden.

Bei einer Ausführungsform der Werkzeugmaschine ist vorgesehen, dass die erste Werkstückaufnahme an einer parallel oder schräg zur Haltefläche verlaufenden und zur Haltefläche beabstandeten Kopffläche des Werkstückhalters angeordnet ist und dass mindestens eine der mindestens einen zweiten Werkstückaufnahme an einer zwischen Haltefläche und Kopffläche angeordneten und quer oder schräg zur Haltefläche verlaufenden Seitenfläche angeordnet ist.

Solchenfalls kann der Werkstückhalter turm- oder klotzartig ausgebildet sein, wobei die erste Werkstückaufnahme an einer dem Werkstücktisch abgewandten Stirnfläche angeordnet ist und die mindestens eine zweite Werkstückaufnahme sich zwischen der ersten Werkstückaufnahme und der Haltefläche des Werkstücktischs erstreckt.

Grundsätzlich ist es denkbar, dass an dem Werkstückhalter nur eine erste Werkstückaufnahme und nur eine zweite Werkstückaufnahme angeordnet ist. Es erweist sich als vorteilhaft, wenn an mindestens einer des mindestens einen Werkstückhalters mindestens zwei zweite Werkstückaufnahmen aufweist, die jeweils quer oder schräg zur ersten Werkstückaufnahme verlaufen und wenn der Werkstückhalter mindestens einen Werkstückhalter-Antrieb umfasst, durch den der Werkstückhalter zumindest in der zweiten Arbeitsstellung des Werkstücktischs relativ zum Werkstücktisch von einer ersten Bearbeitungsstellung, in der eine erste zweite Werkstückaufnahme der Arbeitsspindel zugänglich ist, in mindestens eine weitere Bearbeitungsstellung überführbar ist, in der eine weitere zweite Werkstückaufnahme der Arbeitsspindel zugänglich ist.

Dadurch, dass der Werkstückhalter mindestens zwei zweite Werkstückaufnahmen umfasst, können mindestens zwei Werkstücke an der zweiten Werkstückaufnahme angeordnet und durch die Arbeitsspindel bearbeitet werden. Hierdurch lassen sich Bearbeitungszeiten einsparen.

Beispielsweise ist es denkbar, dass an einem Werkstück, das an der ersten Werkstückaufnahme festgelegt ist, durch Bearbeiten durch die Arbeitsspindel mindestens zwei weiter zu bearbeitende Werkstücke herausgearbeitet werden, die dann als einzelne Werkstücke jeweils an einer zweiten Werkstückaufnahme angeordnet und dort durch die Arbeitsspindel bearbeitet werden können.

Bei der Herstellung von Instrumenten und/oder Werkzeugen für die Medizintechnik kann an der ersten Werkstückaufnahme ein plattenartiges Werkstück angeordnet sein, aus dem beim Bearbeiten ein Steck- und ein Kastenteil eines medizinischen Werkzeugs und/oder Instruments herausgearbeitet wird. Diese können miteinander gefügt einen Nadelhalter bilden, der aus diesen beiden genannten Bauteilen montiert wird.

Hierbei können mehrere Werkstückgrößen ohne Umrüsten abgearbeitet werden. Pro Spannlage können jeweils ein Steck- und jeweils ein Kastenteil, also sechs Spannlagen angeordnet sein. Hierdurch ist kein Umrüsten zwischen diesen Varianten nötig, was Zeit und Kosten spart sowie eine hohe Qualität sichert.

Bei einer Ausführungsform der Werkzeugmaschine erweist es sich als vorteilhaft, wenn am Werkstückhalter mindestens sechs zweite Werkstückhalter angeordnet sind, die um eine quer zur Haltefläche des Werkstücktischs verlaufende Achse durch den Werkstückhalter bezüglich der Umfangsrichtung gleichmäßig verteilt angeordnet sind.

Wenn am Werkstückhalter mehrere zweite Werkstückaufnahmen vorgesehen sind, ist der Werkstückhalter von einer ersten Bearbeitungsstellung in eine zweite Bearbeitungsstellung, usw. überführbar. Die Anzahl der Bearbeitungsstellungen, in die der Werkstückhalter überführbar ist, entspricht der Anzahl der vorgesehenen zweiten Werkstückaufnahmen.

Bei einer Ausführungsform der Werkzeugmaschine erweist es sich als vorteilhaft, wenn mindestens einer des mindestens einen Werkstückhalters um eine quer zur Haltefläche des Werkstücktischs verlaufende Werkstückhalter-Drehachse drehbar an der Haltefläche des Werkstücktisches festgelegt ist.

Dadurch, dass der Werkstückhalter um eine quer zur Haltefläche des Werkstücktischs verlaufende Werkstückhalterdrehachse drehbar ist, kann das an der ersten Werkstückaufnahme und/oder das an der zweiten Werkstückaufnahme angeordnete Werkstück verbessert durch die Arbeitsspindel bearbeitet werden. Hierzu wird dann das Werkstück an der ersten Werkstückaufnahme, bzw. das Werkstück an der zweiten Werkstückaufnahme relativ zur Arbeitsspindel verdreht.

Bei einer Weiterbildung letztgenannter Ausführungsform erweist es sich als vorteilhaft, wenn das Überführen von der ersten Bearbeitungsstellung in die zweite Bearbeitungsstellung durch den Werkstückhalter-Antrieb ein Drehen oder Schwenken des Werkstückhalters um die Werkstückhalter-Drehachse umfasst.

Solchenfalls ist der Werkstückhalter auf einfache Weise von der ersten Arbeitsstellung in die mindestens eine weitere Arbeitsstellung durch Drehen um die Werkstückhalter-Drehachse überführbar, wenn am Werkstückhalter mehr als eine zweite Werkstückaufnahme angeordnet ist.

Es erweist sich als vorteilhaft, wenn mindestens eine der mindestens einen ersten Werkstückaufnahme ein an ihr festgelegtes flaches Werkstück für eine grobe und halbfeine Bearbeitung (OP 10) durch die mindestens eine Arbeitsspindel festlegt und/oder wenn mindestens eine der mindestens einen zweiten Werkstückaufnahme ein an ihr festgelegtes flaches Werkstück für eine Feinbearbeitung (OP 20) durch die mindestens eine Arbeitsspindel festlegt.

Hierdurch kann gewährleistet werden, dass die Bearbeitung an der ersten Werkstückaufnahme von der Bearbeitung an der zweiten Werkstückaufnahme abweicht und hierdurch unterschiedliche Stufen des Herstellungsprozesses eines flachen Instruments und/oder Werkzeugs ermöglicht ist.

Es sind Ausführungsformen der Werkzeugmaschine vorgesehen, bei denen an einem Werkstücktisch mindestens zwei Werkstückhalter angeordnet sind, die auf der gleichen Haltefläche zueinander beabstandet angeordnet sind.

Hierdurch ist es ermöglicht, die Anzahl der herstellbaren Produkte nach einem Beladen des Werkstücktisches zu erhöhen.

Bei einer Weiterbildung letztgenannter Ausführungsform erweist es sich als vorteilhaft, wenn die mindestens eine Arbeitsspindel mindestens eine erste Arbeitsspindel, die einem ersten Werkstückhalter der mindestens zwei Werkstückhalter zugeordnet ist, und mindestens eine weitere Arbeitsspindel umfasst, die einem weiteren Werkstückhalter der mindestens zwei Werkstückhalter zugeordnet ist.

Dadurch, dass die mindestens eine Arbeitsspindel mindestens eine erste Arbeitsspindel und mindestens eine weitere Arbeitsspindel umfasst, wobei jeweils jede Arbeitsspindel einem Werkstückhalter zugeordnet ist, ist die Anzahl der herstellbaren Produkte pro Zeit steigerbar.

Die Anzahl der Arbeitsspindeln kann solchenfalls der Anzahl der Werkstückhalter, die an dem Werkstücktisch auf der gleichen Haltefläche angeordnet sind, entsprechen.

Darüber hinaus sind Ausführungsformen der Werkzeugmaschine denkbar, bei denen an einem Werkstücktisch an einer Haltefläche mindestens ein Werkstückhalter angeordnet ist und auf einer der Haltefläche abgewandten Seite des Werkstücktisches an einer weiteren Haltefläche ebenfalls mindestens ein Werkstückhalter. Solchenfalls wird der Werkstücktisch nicht nur von der ersten Arbeitsstellung in die zweite Arbeitsstellung und zurück überführt, sondern kann auch eine Drehung um 180° umfassen, so dass dann der zuvor rückwärtige Werkstückhalter der Arbeitsspindel zugewandt ist.

Auch bei dieser Konfiguration ist es denkbar, dass an der der Arbeitsspindel zugewandten Haltefläche, zwei oder mehr Werkstückhalter zugewandt sind sowie auf der der Haltefläche abgewandten rückwärtigen Haltefläche des Werkstücktischs mindestens zwei oder mehr Werkstückhalter angeordnet sind.

Um Bearbeitungszeiten zu verkürzen, erweist es sich als vorteilhaft, wenn der mindestens eine Werkstücktisch mindestens zwei Werkstücktische umfasst, wobei ein erster Werkstücktisch um eine erste Tisch-Achse dreh- oder schwenkbar und ein zweiter Werkstücktisch berührungsfrei zum ersten Werkstücktisch um eine zweite Tische-Achse dreh- oder schwenkbar und wobei die erste Tisch-Achse und die zweite Tisch-Achsen parallel zueinander verlaufen.

Dadurch, dass mindestens zwei Werkstücktische vorgesehen sind, die mit ihren Tisch-Achsen parallel zueinander verlaufen, ist die Anzahl der beladbaren Werkstücke steigerbar.

Die mindestens zwei Werkstücktische können beispielsweise beide am Maschinengestell festgelegt sein und übereinander oder nebeneinander angeordnet sein. Wenn die Tisch-Achsen der mindestens zwei Werkstücktische beispielsweise parallel zu einer horizontalen Achse verlaufen, können die Tisch-Achsen der Werkstücktische senkrecht übereinander angeordnet sein. Darüber hinaus ist es denkbar, wenn die Tisch-Achsen parallel zu einer vertikalen Achse verlaufen, dass die Tisch-Achsen der mindestens zwei Werkstücktische horizontal nebeneinander angeordnet sind.

Wenn mindestens zwei Werkstücktische vorgesehen sind, ist es beispielsweise denkbar, dass diese in einer Trennstellung einem der mindestens einen Arbeitsspindel zugewandten Arbeitsbereich von einem der mindestens einen Arbeitsspindel abgewandten Be und Entladebereich abtrennen. Solchenfalls ist es beispielsweise denkbar, dass die Werkstückhalter eines ersten Werkstücktischs bearbeitet werden und hierbei in Richtung Arbeitsbereich zugewandt sind und ein parallel dazu verlaufender Werkstücktisch mit seinem Werkstückhalter im Be- und Entladebereich. Solchenfalls kann hauptzeitparallel ein Werkstücktisch be- und entladen werden, während die Werkstücke am anderen Werkstücktisch durch die Arbeitsspindel bearbeitet werden. Hierbei erweist es sich als vorteilhaft, wenn die Werkstücktische derart ausgebildet sind, dass diese den Arbeitsbereich von Be- und Entladebereich für ein Bedienpersonal abschirmen.

Darüber hinaus sind Ausführungsformen der Werkzeugmaschine denkbar, bei denen der mindestens eine Werkstücktisch an einem Schwenkträger dreh- oder schwenkbar gelagert festgelegt ist, wobei der Schwenkträger am Maschinengestell um eine Schwenkachse dreh- oder schwenkbar gelagert festgelegt ist und von einer ersten Schwenkstellung, in der mindestens einer des mindestens einen Werkstücktischs in einem der mindestens einen Arbeitsspindel zugewandten Arbeitsbereich anordenbar ist, in eine zweite Schwenkstellung überführbar ist, in der der Werkstücktisch in einem Be- und Entladebereich angeordnet ist.

Hierdurch kann ein Be- und Entladen der Werkzeugmaschine vereinfacht sein.

Bei einer Weiterbildung letztgenannter Ausführungsform erweist es sich als vorteilhaft, wenn die mindestens zwei Werkstücktische am Schwenkträger auf einander gegenüberliegenden Seiten angeordnet sind, wobei mindestens ein erster Werkstücktisch in der ersten Schwenkstellung des Schwenkträgers im Arbeitsbereich und mindestens ein zweiter Werkstücktisch in der ersten Schwenkstellung des Schwenkträgers im Be- und Entladebereich angeordnet ist und wobei der mindestens eine erste Werkstücktisch in der zweiten Schwenkstellung des Schwenkträgers im Be- und Entladebereich und der mindestens eine zweite Werkstücktisch in der zweiten Schwenkstellung des Schwenkträgers im Arbeitsbereich angeordnet ist.

Dadurch, dass im Arbeitsbereich immer mindestens ein erster Werkstücktisch angeordnet ist, der durch die mindestens eine Antriebsspindel bearbeitet wird und dadurch, dass der mindestens eine zweite Werkstücktisch solchenfalls in der ersten Schwenkstellung des Schwenkträgers im Be- und Entladebereich angeordnet ist, kann hauptzeitparallel der mindestens eine zweite Werkstücktisch be- und entladen werden, während die am mindestens einen Werkstücktisch angeordneten Werkstücke durch die mindestens eine Arbeitsspindel bearbeitet werden.

Es sind Ausführungsformen denkbar, bei denen am Schwenkträger mehrere erste Werkstücktische angeordnet sind, die in der ersten Schwenkstellung des Schwenkträgers im Arbeitsbereich angeordnet sind und mehrere zweite Werkstücktische, die in der ersten Schwenkstellung des Schwenkträgers im Be- und Entladebereich angeordnet sind. Diese können übereinander oder nebeneinander angeordnet sein.

Es sind Ausführungsformen denkbar, bei denen die Schwenkträgerachse, die mindestens eine erste Tisch-Achse und/oder die mindestens eine zweite Tisch-Achse parallel zu einer horizontal verlaufenden X-Achse verläuft, bzw. verlaufen und insbesondere parallel zueinander und verlaufen oder bei denen die Schwenkträgerachse, die mindestens eine erste Tisch-Achse und/oder die mindestens eine zweite Tisch-Achse parallel zu einer vertikal verlaufenden Y-Achse verläuft, bzw. verlaufen und insbesondere parallel zueinander verlaufen.

Darüber hinaus sind auch Ausführungsformen der Werkzeugmaschine denkbar, bei denen die Schwenkträgerachse parallel zu einer vertikal verlaufenden Y-Achse verläuft und die mindestens eine erste Tisch-Achse und/oder die mindestens eine zweite Tisch-Achse parallel zu einer horizontal verlaufenden X-Achse verläuft. Umgekehrt ist es auch denkbar, dass, wenn die Schwenkträgerachse um eine parallel zur horizontal verlaufenden X-Achse verläuft, die mindestens eine erste Tisch-Achse und/oder die mindestens eine zweite Tisch-Achse parallel zu einer vertikal verlaufenden Y-Achse verläuft.

Wenn mehr als eine erste Tisch-Achse und eine zweite Tisch-Achse vorgesehen sind, können alle Tisch-Achsen parallel zueinander verlaufen.

Schließlich erweist es sich als vorteilhaft, wenn die erste Arbeitsspindel und die mindestens eine weitere Arbeitsspindel horizontal nebeneinander angeordnet sind, wenn die mindestens eine Tisch-Achse, insbesondere die erste Tisch-Achse, parallel zur horizontal verlaufenden X-Achse verläuft, und wenn die erste Arbeitsspindel und die mindestens eine weitere Arbeitsspindel vertikal übereinander angeordnet sind, wenn die mindestens eine Tisch-Achse, insbesondere die erste Tisch-Achse, parallel zur vertikal verlaufenden Y-Achse verläuft.

Die Anzahl der Arbeitsspindeln kann der Anzahl der Werkstückhalter im Arbeitsbereich entsprechen.

Darüber hinaus wird die Aufgabe gelöst durch ein Verfahren zum Herstellen flacher Instrumente und/oder Werkzeuge für die Medizintechnik mit einer Werkzeugmaschine mit einem der zuvor genannten Merkmale mit den Schritten:
a. 100: Festlegen eines flachen Werkstücks an der mindestens einen ersten Werkstückaufnahme;
b. 101: Festlegen mindestens eines bereits an der ersten Werkstückaufnahme bearbeiteten Werkstücks an einer der mindestens einen zweiten Werkstückaufnahme;
c. 102: Überführen des Werkstücktischs in die erste Arbeitsstellung, in der die erste Werkstückaufnahme der mindestens einen Arbeitsspindel zum Bearbeiten zugänglich ist, und Bearbeiten des an der ersten Werkstückaufnahme festgelegten Werkstücks durch die Arbeitsspindel;
d. 103: Überführen des Werkstücktischs in die zweite Arbeitsstellung, in der die zweite Werkstückaufnahme der mindestens einen Arbeitsspindel zum Bearbeiten zugänglich ist, und Bearbeiten des an der zweite Werkstückaufnahme festgelegten Werkstücks durch die Arbeitsspindel;
e. 104: Ggf. Überführen des Werkstückhalters von der ersten Bearbeitungsstellung in eine weitere Bearbeitungsstellung;
f. 105: Entnehmen des mindestens einen an der zweiten Werkstückaufnahme bearbeiteten Werkstücks sowie Entnehmen des mindestens einen an der ersten Werkstückaufnahme bearbeiteten Werkstücks.

Schritt 104 kann gegebenenfalls erfolgen. Das heißt, wenn am Werkstückhalter nur eine zweite Werkstückaufnahme angeordnet ist, wird Schritt 104 nicht durchgeführt. Wenn mehrere zweite Werkstückaufnahmen vorgesehen sind und an diesen jeweils zu bearbeitende Werkstücke vorgesehen sind, ist Schritt 104 durchzuführen.

Die an der ersten Werkstückaufnahme angeordneten und bearbeiteten Werkstücke können beim Bearbeiten und im Schritt 105 komplett abgetrennt werden. Dieses ermöglicht es dann, dass diese entweder manuell oder mit einem Roboter abgebrochen werden.

Durch eine Umgreifstation können diese Teile dann als weiter zu bearbeitenden Werkstücke an den zweiten Werkstückaufnahmen angeordnet und festgelegt werden.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Werkzeugmaschine.

In der Zeichnung zeigt:
- Figur 1: Eine schematische perspektivische Darstellung einer Ausführungsform der erfindungsgemäßen Werkzeugmaschine;
- Figur 2: Eine isometrische Detaildarstellung eines Werkstücktisches mit zwei darauf angeordneten Werkstückhaltern gemäß Ausführungsbeispiel nach Figur 1;
- Figur 3: Eine Draufsicht auf den Werkstücktisch mit zwei darauf angeordneten Werkstückhaltern gemäß Figur 2;
- Figur 4: Ein schematisches Ablaufdiagramm einer Ausführungsform des erfindungsgemäßen Verfahrens.

Die Figuren zeigen eine insgesamt mit dem Bezugszeichen 2 versehene Werkzeugmaschine für die Herstellung flacher Instrumente und/oder Werkzeuge. Die Werkzeugmaschine 2 umfasst ein Maschinengestell 4 und, bei dem in den Figuren gezeigten Ausführungsbeispiel, zwei Arbeitsspindeln 6. Die Arbeitsspindeln 6 sind jeweils um eine Spindelachse 8 drehbar.

Darüber hinaus umfasst die Werkzeugmaschine 2 bei dem in den Figuren gezeigten Ausführungsbeispiel zwei Werkstücktische 10, die mittelbar am Maschinengestell 4 jeweils um eine Tisch-Achse 12 dreh- oder schwenkbar gelagert sind.

Bei dem in den Figuren gezeigten Ausführungsbeispiel sind an jedem Werkstücktisch 10 jeweils zwei Werkstückhalter 14 angeordnet, die jeweils am Werkstücktisch 10 festgelegt sind.

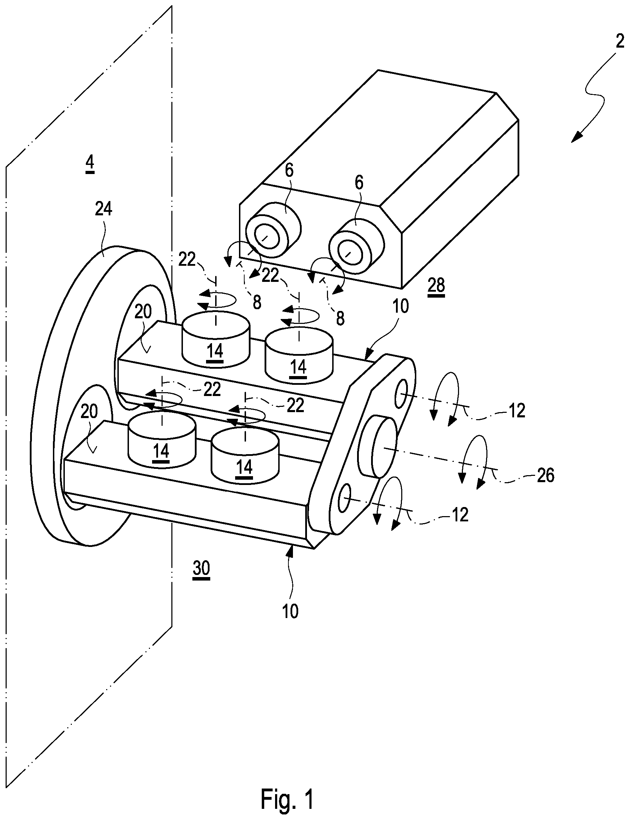

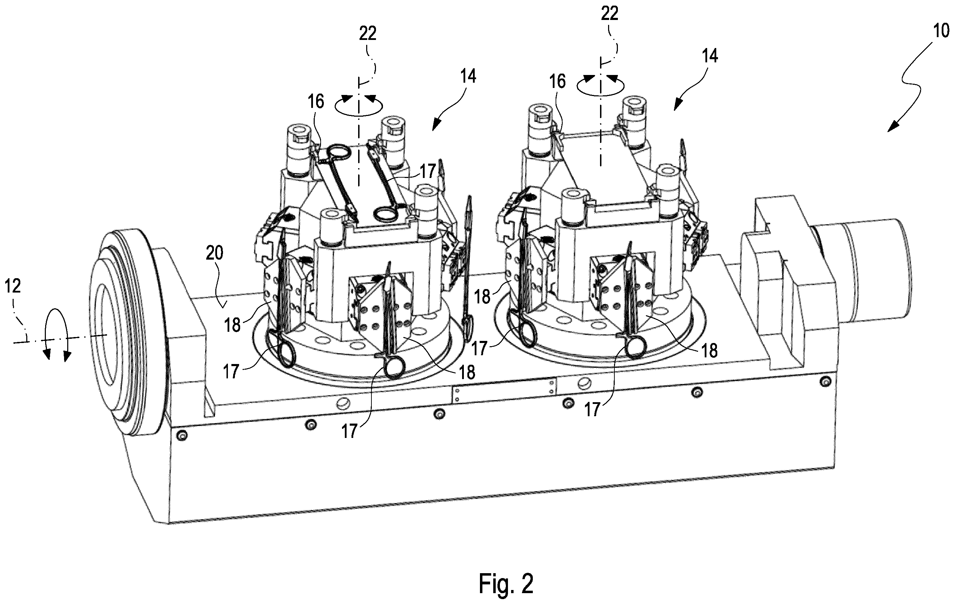

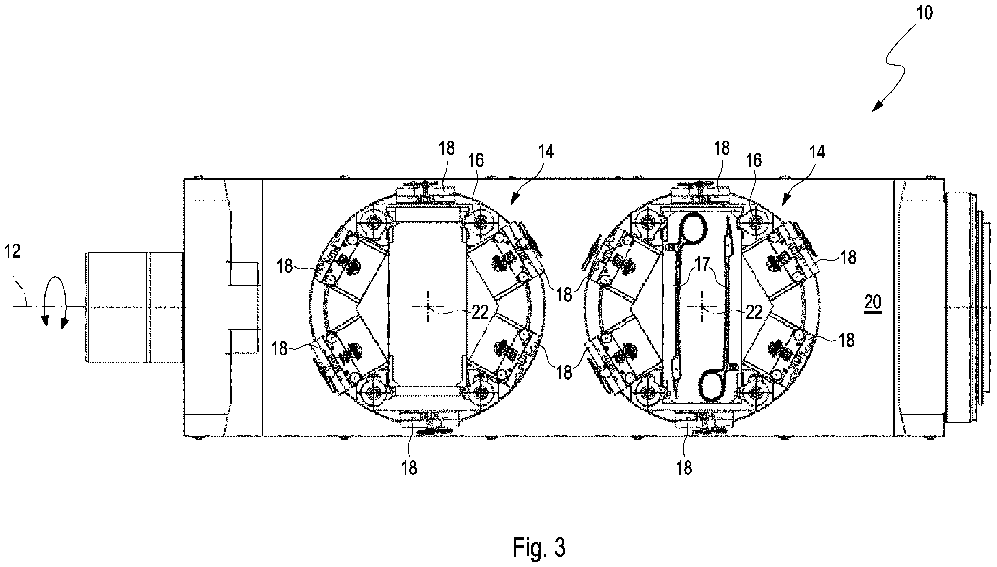

Die Werkstückhalter 14 sind in Figur 1 lediglich schematisch dargestellt. Im Weiteren wird auf die Darstellung gemäß Figuren 2 und 3 verwiesen.

Die Werkstückhalter 14 umfassen jeweils eine erste Werkstückaufnahme 16, an der ein flaches Werkstück 17 zum Bearbeiten einer Flachseite festlegbar ist. Bei dem in den Figuren gezeigten Ausführungsbeispiel umfasst jeder Werkstückhalter 14 sechs zweite Werkstückaufnahmen 18, die quer oder schräg zur ersten Werkstückaufnahme 16 verlaufen und an denen ein flaches Werkstück 17 zum Bearbeiten einer Stirnseite festlegbar ist.

Die Werkstücktische 10 sind derart festgelegt, dass diese von einer ersten Arbeitsstellung, in der die erste Werkstückaufnahme 16 mindestens einer der mindestens einen Arbeitsspindeln 6 zum Bearbeiten zugänglich ist, durch Drehen oder Schwenken um die dem Werkstücktisch 10 zugeordnete Tisch-Achse 12 in mindestens eine zweite Arbeitsstellung überführbar ist, in der die zweite Werkstückaufnahme 18 mindestens einer der mindestens einen Arbeitsspindel 6 zum Bearbeiten zugänglich ist.

Bei dem in den Figuren gezeigten Ausführungsbeispiel der Werkzeugmaschine 2 umfasst jeder der Werkstücktische 10 jeweils eine Haltefläche 20, an der jeweils zwei Werkstückhalter 14 festgelegt sind. Die Haltefläche 20 ist in der ersten Arbeitsstellung quer oder schräg zur Spindelachse 8 einer Arbeitsspindel 6 angeordnet und in der zweiten Arbeitsstellung quer oder schräg zur Spindelachse 8 der Arbeitsspindel 6 angeordnet. Die ersten Werkstückaufnahmen 16 der Werkstückhalter 14 verlaufen im Wesentlichen parallel zur Haltefläche 20 des Werkstücktischs 10, an dem der Werkstückhalter 14 angeordnet ist und die zweiten Werkstückaufnahmen 18 im Wesentlichen quer oder schräg zur Haltefläche 20.

Hierdurch ist es ermöglicht, dass ein an der ersten Werkstückaufnahme 16 angeordnetes flaches Werkstück 17 an seiner Flachseite in der ersten Arbeitsstellung des Werkstücktischs 10 durch eine Arbeitsspindel 6 bearbeitbar ist. Hierdurch ist es ferner ermöglicht, dass, wenn der Werkstücktisch 10 in die zweite Arbeitsstellung überführt ist, dass ein an der zweiten Werkstückaufnahme 18 angeordnetes flaches Werkstück 17 an seiner Stirnseite durch die Arbeitsspindel 6 bearbeitbar ist.

Die Werkzeugmaschine 2 ist derart ausgebildet, dass jeder Werkstückhalter 14 um eine quer zur Haltefläche 20 erstreckte Werkstückhalter-Drehachse 22 drehbar ist. Hierdurch ist es ermöglicht, dass die Werkstückhalter 14 in unterschiedlichen Bearbeitungsstellungen anordenbar sind. In einer ersten Bearbeitungsstellung, bei der der Werkstücktisch 10 in der zweiten Arbeitsstellung angeordnet ist, ist eine erste zweite Werkstückaufnahme 18 der Arbeitsspindel 6 zugewandt. Durch Drehen um die Werkstückhalter-Drehachse 22, ist eine zweite zweite Werkstückaufnahme 18 in eine zweite Bearbeitungsstellung überführbar, in der ein an der zweiten zweiten Werkstückaufnahme 18 angeordnetes flaches Werkstück 17 durch die Arbeitsspindel 6 bearbeitbar ist.

Die Werkzeugmaschine 2 ist derart ausgebildet, dass an der ersten Werkstückaufnahme 16 angeordnete flache Werkstücke 17 durch die Arbeitsspindel 6 grob und halbfein (OP 10) bearbeitet werden können und an der zweiten Werkstückaufnahme 18 angeordnete flache Werkstücke 17 durch die Arbeitsspindel 6 einer Feinbearbeitung (OP 20) zugänglich sind.

Die Figuren zeigen eine Ausführungsform der Werkzeugmaschine 2, bei der zwei Werkstücktische 10 vorgesehen sind. Diese sind bezüglich ihrer Tisch-Achsen 12 parallel zueinander verlaufend und zueinander beabstandet angeordnet. Beide Werkstücktische 10 sind an einem gemeinsamen Schwenkträger 24 drehbar angeordnet. Der Schwenkträger 24 ist am Maschinengestell 4 um eine Schwenkachse 26 dreh- oder schwenkbar gelagert, festgelegt.

Hierdurch ist es ermöglicht, dass einer der Werkstücktische 10 auf einer mindestens einer Arbeitsspindel 6 zugewandten Seite angeordnet ist, die einen Arbeitsbereich 28 bildet. Auf der bezüglich der Schwenkachse 26 gegenüberliegenden Seite ist ein weiterer Werkstücktisch 10 angeordnet, der in einem Be- und Entladebereich 30 angeordnet ist. Dadurch, dass immer ein Werkstücktisch 10 im Arbeitsbereich 28 angeordnet und durch die Arbeitsspindel 6 bearbeitbar ist und ein Werkstücktisch 10 im Be- und Entladebereich 30 angeordnet ist, kann der im Be- und Entladebereich 30 angeordnete Werkstücktisch 10, be- und entladen werden, während die im Arbeitsbereich 28 befindlichen Werkstücke 17 bearbeitet werden. Dieses ermöglich ein hauptzeitparalleles Be- und Entladen der Werkzeugmaschine 2.

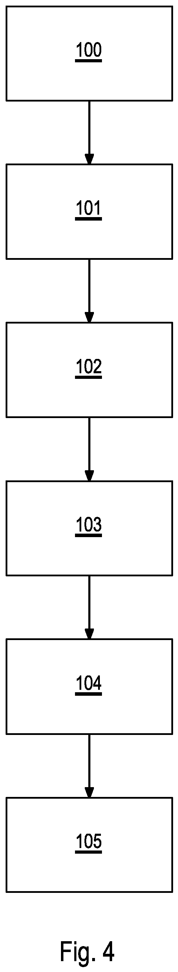

Figur 4 zeigt ein schematisches Ablaufdiagramm einer Ausführungsform eines erfindungsgemäßen Verfahrens zum Herstellen flacher Instrumente und/oder Werkzeuge für die Medizintechnik. Unter Verweis auf die Vorrichtung gemäß Darstellung in den Figuren 1 bis 3 wird nachfolgend das Verfahren beschrieben: In einem Schritt 100 wird mindestens ein flaches Werkstücks 17 an einer ersten Werkstückaufnahme 16 festgelegt.

Parallel oder nachfolgend hierzu kann in einem Schritt 101 ein bereits an der ersten Werkstückaufnahme 16 bearbeitetes Werkstück 17 an einer der mindestens einen zweiten Werkstückaufnahme 18 festgelegt werden.

In einem Schritt 102 wird der Werkstücktisch 10 in die erste Arbeitsstellung überführt, in der die erste Werkstückaufnahme 16 der mindestens einen Arbeitsspindel 6 zum Bearbeiten zugänglich ist. in der ersten Arbeitsstellung wird das Werkstück 17, das an der ersten Werkstückaufnahme 10 festgelegt ist, durch die Arbeitsspindel 6 bearbeitet.

Wenn das Werkstück 17 an der erstem Werkstückaufnahme 16 bearbeitet ist, wird in einem Schritt 103 der Werkstücktisch 10 in die zweite Arbeitsstellung überführt, in der die zweite Werkstückaufnahme 18 der mindestens einen Arbeitsspindel 6 zum Bearbeiten zugänglich ist. in der zweiten Arbeitsstellung werden dann die an der zweite Werkstückaufnahme 18 festgelegten Werkstücke 17 durch die Arbeitsspindel 6 bearbeitet.

In einem Schritt 104 kann der Werkstückhalters 14 gegebenenfalls von der ersten Bearbeitungsstellung in eine weitere Bearbeitungsstellung überführt werden. Dieses ist dann der Fall, wenn mehrere zweite Werkstückaufnahmen 18 mit daran angeordneten Werkstücken 17 vorgesehen sind.

Hiernach können in einem abschließenden Schritt 105 die an der zweiten Werkstückaufnahme 18 bearbeiteten Werkstücke 17 sowie die an der ersten Werkstückaufnahme 16 bearbeiteten Werkstücke 17 entnommen werden.

Dieses kann bezüglich der an der ersten Werkstückaufnahme 16 bearbeiteten Werkstücke 17 ein nahezu komplettes Abtrennen der Werkstücke 17 aus einer Rohmaterialplatte umfassen, beispielsweise manuell oder vollautomatisiert über einen Roboter. Diese an der ersten Werkstückaufnahme 16 bearbeiteten Werkstücke 17 können dann direkt oder über eine Umgreifstation an der zweiten Werkstückaufnahme 18 in einem erneuten Schritt 101 festgelegt werden.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen im Rahmen des Schutzumfangs der nachfolgenden Ansprüche wesentlich sein.

### Bezugszeichenliste

- 2: Werkzeugmaschine
- 4: Maschinengestell
- 6: Arbeitsspindel
- 8: Spindelachse
- 10: Werkstücktisch
- 12: Tisch-Achse
- 14: Werkstückhalter
- 16: erste Werkstückaufnahme
- 17: Werkstück
- 18: zweite Werkstückaufnahme
- 20: Haltefläche
- 22: Werkstückhalter-Drehachse
- 24: Schwenkträger
- 26: Schwenkachse
- 28: Arbeitsbereich
- 30: Be- und Entladebereich

## Patentansprüche

1. Werkzeugmaschine (2) für die Herstellung flacher Instrumente und/oder Werkzeuge für die Medizintechnik mit einem Maschinengestell (4), mit mindestens einer Arbeitsspindel (6), die um eine Spindelachse (8) drehbar gelagert ist, mit mindestens einem der mindestens einen Arbeitsspindel (6) zuordenbaren oder zugeordneten Werkstücktisch (10), der mittelbar oder unmittelbar am Maschinengestell (4) um eine Tisch-Achse (12) dreh- oder schwenkbar gelagert ist, und mit mindestens einem Werkstückhalter (14), der am Werkstücktisch (10) festgelegt ist, der mindestens eine erste Werkstückaufnahme (16), an der ein flaches Werkstück (17) zum Bearbeiten einer Flachseite festlegbar ist, und der mindestens eine zweite Werkstückaufnahme (18) aufweist, die quer oder schräg zur ersten Werkstückaufnahme (16) verläuft und an der ein flaches Werkstück (17) zum Bearbeiten einer Stirnseite festlegbar ist, wobei mindestens einer des mindestens einen Werkstücktischs (10) von einer ersten Arbeitsstellung, in der die erste Werkstückaufnahme (16) mindestens einer der mindestens einen Arbeitsspindel (6) zum Bearbeiten zugänglich ist, durch Drehen oder Schwenken um die ihm zugeordnete Tisch-Achse (12) in eine zweite Arbeitsstellung überführbar ist, in der die zweite Werkstückaufnahme (18) mindestens einer der mindestens einen Arbeitsspindel (6) zum Bearbeiten zugänglich ist.

2. Werkzeugmaschine (2) nach Anspruch 1, **dadurch gekennzeichnet, dass** mindestens einer des mindestens einen Werkstücktischs (10) eine Haltefläche (20) umfasst, an der mindestens einer des mindestens einen Werkstückhalters (14) angeordnet ist, und die in der ersten Arbeitsstellung quer oder schräg zur Spindelachse (8) der dem Werkstücktisch (10) zugeordneten Arbeitsspindel (6) und die in der zweiten Arbeitsstellung quer oder schräg zur Spindelachse (8) der dem Werkstücktisch (10) zugeordneten Arbeitsspindel (6) angeordnet ist.

3. Werkzeugmaschine (2) nach Anspruch 2, **dadurch gekennzeichnet, dass** die erste Werkstückaufnahme (16) des Werkstückhalters (14) parallel oder schräg zur Haltefläche (20) des Werkstücktisches (10) verläuft und dass das an der ersten Werkstückaufnahme (16) festgelegte flache Werkstück (17) an seiner parallel oder schräg zur Haltefläche (20) verlaufenden Flachseite durch die Arbeitsspindel (6) bearbeitbar ist und/oder dass die zweite Werkstückaufnahme (18) des Werkstückhalters (14) quer oder schräg zur Haltefläche (20) des Werkstücktisches (10) verläuft und dass das an der zweiten Werkstückaufnahme (18) festgelegte flache Werkstück (17) an seiner quer oder schräg zur Haltefläche (20) verlaufenden Stirnseite des Werkstücks (17)durch die Arbeitsspindel (6) bearbeitbar ist.

4. Werkzeugmaschine (2) nach Anspruch 2 oder 3, **dadurch gekennzeichnet, dass** die erste Werkstückaufnahme (16) an einer parallel oder schräg zur Haltefläche (20) verlaufenden und zur Haltefläche (20) beabstandeten Kopffläche des Werkstückhalters (14) angeordnet ist und dass mindestens eine der mindestens einen zweiten Werkstückaufnahme (18) an einer zwischen Haltefläche (20) und Kopffläche angeordneten und quer oder schräg zur Haltefläche (20) verlaufenden Seitenfläche angeordnet ist.

5. Werkzeugmaschine (2) nach einem der vorhergehenden Ansprüche, **dadurch gekennzeichnet, dass** mindestens einer des mindestens einen Werkstückhalters (14) mindestens zwei zweite Werkstückaufnahmen (18) aufweist, die jeweils quer oder schräg zur ersten Werkstückaufnahme (16) verlaufen und dass der Werkstückhalter (14) mindestens einen Werkstückhalter-Antrieb umfasst, durch den der Werkstückhalter (14) zumindest in der zweiten Arbeitsstellung des Werkstücktischs (10) relativ zum Werkstücktisch (10) von einer ersten Bearbeitungsstellung, in der eine erste zweite Werkstückaufnahme (18) der Arbeitsspindel (6) zugänglich ist, in mindestens eine weitere Bearbeitungsstellung überführbar ist, in der eine weitere zweite Werkstückaufnahme (18) der Arbeitsspindel (6) zugänglich ist.

6. Werkzeugmaschine (2) nach einem der vorhergehenden Ansprüche, **dadurch gekennzeichnet, dass** mindestens einer des mindestens einen Werkstückhalters (14) um eine quer zur Haltefläche (20) des Werkstücktischs (10) verlaufende Werkstückhalter-Drehachse (22) drehbar an der Haltefläche (20) des Werkstücktischs (10) festgelegt ist.

7. Werkzeugmaschine (2) nach Anspruch 6, **dadurch gekennzeichnet, dass** das Überführen von der ersten Bearbeitungsstellung in die zweite Bearbeitungsstellung durch den Werkstückhalter-Antrieb ein Drehen oder Schwenken des Werkstückhalters (14) um die Werkstückhalter-Drehachse (22) umfasst.

8. Werkzeugmaschine (2) nach einem der vorhergehenden Ansprüche, **dadurch gekennzeichnet, dass** mindestens eine der mindestens einen ersten Werkstückaufnahme (16) ein an ihr festgelegtes flaches Werkstück (17) für eine grobe und halbfeine Bearbeitung (OP 10) durch die mindestens eine Arbeitsspindel (6) festlegt und/oder dass mindestens eine der mindestens einen zweiten Werkstückaufnahme (18) ein an ihr festgelegtes flaches Werkstück (17) für eine Feinbearbeitung (OP 20) durch die mindestens eine Arbeitsspindel (6) festlegt.

9. Werkzeugmaschine (2) nach einem der vorhergehenden Ansprüche, **dadurch gekennzeichnet, dass** an einem Werkstücktisch (10) mindestens zwei Werkstückhalter (14) angeordnet sind, die auf der gleichen Haltefläche (20) zueinander beabstandet angeordnet sind, und insbesondere dass die mindestens eine Arbeitsspindel (6) mindestens eine erste Arbeitsspindel (6), die einem ersten Werkstückhalter (14) der mindestens zwei Werkstückhalter (14) zugeordnet ist, und mindestens eine weitere Arbeitsspindel (6) umfasst, die einem weiteren Werkstückhalter (14) der mindestens zwei Werkstückhalter (14) zugeordnet ist.

10. Werkzeugmaschine (2) nach einem der vorhergehenden Ansprüche, **dadurch gekennzeichnet, dass** der mindestens eine Werkstücktisch (10) mindestens zwei Werkstücktische (10) umfasst, wobei ein erster Werkstücktisch (10) um eine erste Tisch-Achse (12) dreh- oder schwenkbar ist, wobei ein zweiter Werkstücktisch (10) berührungsfrei zum ersten Werkstücktisch (10) um eine zweite Tische-Achse (12) dreh- oder schwenkbar ist und wobei die erste Tisch-Achse (12) und die zweite Tisch-Achse (12) parallel zueinander verlaufen.

11. Werkzeugmaschine (2) nach einem der vorhergehenden Ansprüche, **dadurch gekennzeichnet, dass** der mindestens eine Werkstücktisch (10) an einem Schwenkträger (24) dreh- oder schwenkbar gelagert festgelegt ist, wobei der Schwenkträger (24) am Maschinengestell (4) um eine Schwenkachse (26) dreh- oder schwenkbar gelagert festgelegt ist und von einer ersten Schwenkstellung, in der mindestens einer des mindestens einen Werkstücktischs (10) in einem der mindestens einen Arbeitsspindel (6) zugewandten Arbeitsbereich (28) anordenbar ist, in eine zweite Schwenkstellung überführbar ist, in der der Werkstücktisch (10) in einem Be- und Entladebereich (30) angeordnet ist.

12. Werkzeugmaschine (2) nach Anspruch 11, **dadurch gekennzeichnet, dass** die mindestens zwei Werkstücktische (10) am Schwenkträger (24) auf einander gegenüberliegenden Seiten angeordnet sind, wobei mindestens ein erster Werkstücktisch (10) in der ersten Schwenkstellung des Schwenkträgers (24) im Arbeitsbereich (28) und mindestens ein zweiter Werkstücktisch (10) in der ersten Schwenkstellung des Schwenkträgers (24) im Be- und Entladebereich (30) angeordnet ist und wobei der mindestens eine erste Werkstücktisch (10) in der zweiten Schwenkstellung des Schwenkträgers (24) im Be- und Entladebereich (30) und der mindestens eine zweite Werkstücktisch (10) in der zweiten Schwenkstellung des Schwenkträgers (24) im Arbeitsbereich (28) angeordnet ist.

13. Werkzeugmaschine (2) nach einem der vorhergehenden Ansprüche, **dadurch gekennzeichnet, dass** die Schwenkträgerachse, die mindestens eine erste Tisch-Achse (12) und/oder die mindestens eine zweite Tisch-Achse (12) parallel zu einer horizontal verlaufenden X-Achse verläuft bzw. verlaufen, und insbesondere parallel zueinander und verlaufen oder dass die Schwenkträgerachse, die mindestens eine erste Tisch-Achse (12) und/oder die mindestens eine zweite Tisch-Achse (12) parallel zu einer vertikal verlaufenden Y-Achse verläuft bzw. verlaufen, und insbesondere parallel zueinander verlaufen.

14. Werkzeugmaschine (2) nach einem der Ansprüche 9 bis 13, **dadurch gekennzeichnet, dass** die erste Arbeitsspindel (6) und die mindestens eine weitere Arbeitsspindel (6) horizontal nebeneinander angeordnet sind, wenn die mindestens eine Tisch-Achse (12), insbesondere die erste Tisch-Achse (12), parallel zur horizontal verlaufenden X-Achse verläuft, und dass die erste Arbeitsspindel (6) und die mindestens eine weitere Arbeitsspindel (6) vertikal übereinander angeordnet sind, wenn die mindestens eine Tisch-Achse (12), insbesondere die erste Tisch-Achse (12), parallel zur vertikal verlaufenden Y-Achse verläuft.

15. Verfahren zum Herstellen flacher Instrumente und/oder Werkzeuge für die Medizintechnik mit einer Werkzeugmaschine (2) nach einem der Ansprüche 1 bis 14, mit den Schritten:
a. 100: Festlegen eines flachen Werkstücks (17) an der mindestens einen ersten Werkstückaufnahme (16);
b. 101: Festlegen mindestens eines bereits an der ersten Werkstückaufnahme (16) bearbeiteten Werkstücks (17) an einer der mindestens einen zweiten Werkstückaufnahme (18);
c. 102: Überführen des Werkstücktischs (10) in die erste Arbeitsstellung, in der die erste Werkstückaufnahme (16) der mindestens einen Arbeitsspindel (6) zum Bearbeiten zugänglich ist, und Bearbeiten des an der ersten Werkstückaufnahme (10) festgelegten Werkstücks (17) durch die Arbeitsspindel (6);
d. 103: Überführen des Werkstücktischs (10) in die zweite Arbeitsstellung, in der die zweite Werkstückaufnahme (18) der mindestens einen Arbeitsspindel (6) zum Bearbeiten zugänglich ist, und Bearbeiten des an der zweite Werkstückaufnahme (18) festgelegten Werkstücks (17) durch die Arbeitsspindel (6);
e. 104: Ggf. Überführen des Werkstückhalters (14) von der ersten Bearbeitungsstellung in eine weitere Bearbeitungsstellung;
f. 105: Entnehmen des mindestens einen an der zweiten Werkstückaufnahme (18) bearbeiteten Werkstücks (17) sowie Entnehmen des mindestens einen an der ersten Werkstückaufnahme (16) bearbeiteten Werkstücks (17).
